# EUROPÄISCHE PATENTANMELDUNG

(11) **EP 2 420 625 A2**
(43) Veröffentlichungstag der Anmeldung: **22.02.2012**
(21) Anmeldenummer: 11178178.7
(22) Anmeldetag: 19.08.2011
(51) Int. Cl.: E02D 13/00, E02D 13/04, E02D 27/42, E02D 27/52, F03D 1/00, F03D 11/04

(54) **Gründungsstruktur mit Schallschutz für eine Offshore-Windenergieanlage**

(30) Priorität: 20.08.2010 DE 102010035025; 20.08.2010 DE 102010035035
(71) Anmelder: Hilgefort GmbH Anlagenkomponenten und Apparatebau, 49413 Dinklage (DE)
(72) Erfinder: Baumfalk, Frank, 27801 Dötlingen (DE)
(74) Vertreter: Eisenführ, Speiser & Partner

(57) **Zusammenfassung**

Die Erfindung betrifft eine Gründungsstruktur (1) für eine Offshore-Windenergieanlage mit wenigstens einem Gründungspfahl (2, 3, 4), vorzugsweise drei Gründungspfählen, wobei der Gründungspfahl (2, 3, 4) eine Länge derart aufweist, dass er an einem Aufstellort aufgestellt von einem Meeresboden (10) aus bis über einen Meeresspiegel (14) reicht, wobei der Gründungspfahl (2, 3, 4) einen wenigstens abschnittsweise in seinem Inneren geführten Rammpfahl (11, 12, 13) zur Verankerung im Meeresboden (10) aufweist, und mit mindestens einer Stützkonstruktion (5) zur Aufnahme der Windenergieanlage. Erfindungsgemäß wird vorgeschlagen, dass wenigstens ein Abschnitt des Gründungspfahls (2, 3, 4) eine Wandung aus mehreren Lagen (19, 20, 21) aufweist, wobei mindestens eine innere Lage (19) und eine äußere Lage (20) vorgesehen sind, zwischen denen wenigstens eine Zwischenlage (21), welche einen schalldämmenden Kernwerkstoff, insbesondere Beton, aufweist, angeordnet ist.

Die Erfindung betrifft ferner ein Verfahren zum Dämmen von Schallemissionen und eine Schallschutzvorrichtung.

## Beschreibung

Die Erfindung bezieht sich auf eine Gründungsstruktur für eine Offshore-Windenergieanlage mit wenigstens einem Gründungspfahl, vorzugsweise drei Gründungspfählen, wobei der Gründungspfahl eine Länge derart aufweist, dass er an einem Aufstellort aufgestellt von einem Meeresboden aus bis über einen Meeresspiegel reicht, wobei der Gründungspfahl einen wenigstens abschnittsweise in seinem Inneren geführten Rammpfahl zur Verankerung im Meeresboden aufweist, und mit mindestens einer Stützkonstruktion zur Aufnahme der Windenergieanlage.

Des Weiteren bezieht sich die Erfindung auch auf ein Verfahren zum Dämmen von Schallemissionen beim Errichten einer Gründungsstruktur, insbesondere einer Gründungsstruktur nach einem der vorstehenden Ansprüche, für eine Offshore-Windenergieanlage, wobei die Gründungsstruktur wenigstens einen Gründungspfahl und einen in diesem geführten Rammpfahl aufweist, sowie auf eine Schallschutzvorrichtung.

Bekannte Gründungsstrukturen für Offshore-Windenergieanlagen, bilden üblicherweise den Übergang von der Windenergieanlage (WEA) zum Meeresboden und sollen eine sichere Verankerung im Meeresboden gewährleisten. Speziell Offshore-Windenergieanlagen werden zunehmend in einiger Entfernung zur Küste und dadurch häufig in Wassertiefen von bis zu 50 Metern oder mehr aufgestellt. Aufgrund der an einem solchen Aufstellort vorherrschenden Umgebungsbedingungen und den damit in der Regel auf die Gründungsstruktur und das Wasserbauwerk einwirkenden Wind- und Wellenlasten, werden entsprechend hohe Anforderungen an die Verankerung der Gründungsstruktur im Meeresboden und die das Wasserbauwerk tragende Gründungsstruktur selbst gestellt. Insbesondere das Aufstellen der Gründungsstrukturen an derartigen Orten ist mit hohem Aufwand verbunden.

Für eine Aufstellung von Gründungsstrukturen auf dem Meeresboden sind grundsätzlich verschiedene Möglichkeiten bekannt. Beispielsweise existieren einfache Schwerkraft-Konstruktionen, bei denen am unteren Ende eines Gründungspfahls ein großes Gewicht, beispielsweise ein Betonkörper, angeordnet ist, mittels die die Gründungsstruktur auf dem Meeresboden aufgestellt wird. Die ist allerdings nur für geringe Wassertiefen bis etwa 20 Meter sicher. Für größere Wassertiefen werden üblicherweise mittels sogenannter Rammpfähle im Meeresboden verankerte Gründungskonstruktionen eingesetzt. Auch hier lassen sich verschiedene grundlegende Konstruktionen unterscheiden.

In der EP 1 673 536 B1 ist beispielsweise eine Gründungsstruktur für eine Offshore-Windenergieanlage beschrieben, welche sechs Gründungspfähle mit jeweils im Inneren der Gründungspfähle wenigstens abschnittsweise geführten Rammpfählen zur Verankerung im Meeresboden aufweist. Die Gründungsstruktur weist des Weiteren mindestens eine Stützkonstruktion zur Aufnahme des Turmes der Windenergieanlage auf, wobei die Stützkonstruktion die oberen Enden der Gründungspfähle untereinander verbindet. Dabei ist nach dem Rammen der Rammpfähle ein vorgegebener Längenabschnitt erzeugt, in dem die Rammpfähle von den Gründungspfählen aufgenommen sind. Um die Relativbewegung zwischen den Gründungspfählen und den Rammpfählen zu unterbinden und dadurch möglicherweise ein Lockern der Verankerung der Gründungsstruktur im Meeresboden zu verursachen, wird ein Teilabschnitt des Überdeckungsbereiches zwischen der Außenseite des Rammpfahles und der Innenseite des Gründungspfahles verklebt. Durch die relativ schmale Verklebung zwischen der Außenseite des Gründungspfahles und der Innenseite des Rammpfahles besteht zum einen das Risiko, dass die Verklebung reißt und somit der Rammpfahl wieder beweglich zum Gründungspfahl ist. Zum anderen wirkt im Bereich des Meeresbodens das größte durch Wind- und Wellenlasten hervorgerufene Moment auf die Gründungs- und Rammpfähle der Gründungsstruktur, so dass es durch die ständigen Lastwechsel kurz unterhalb des Überdeckungsbereiches der Pfähle zur Verformung und gegebenenfalls zum Knicken der Wandungen der Rammpfähle kommen kann, was sich in jedem Fall nachteilig auf deren Verankerung und damit auf die betriebssichere Langzeitfunktion der Gründungsstruktur auswirken kann.

Das Rammen der Rammpfähle wird üblicherweise mittels Rammen bewirkt, welche auf ein Kopfende eines Rammpfahles einwirken. Da ein Rammpfahl etwa bis zu einer Tiefe in den Meeresboden eingerammt wird, die in etwa der Wassertiefe des Aufstellortes entspricht, nimmt das Rammen mehrere Stunden in Anspruch. Dabei werden erhebliche Geräuschemissionen frei. So werden beispielsweise bei Tripod-Konstruktionen, welche drei Gründungspfähle aufweisen, die vom Meeresboden bis über die Wasseroberfläche reichen, in 50 Meter Entfernung zur Gründungsstruktur im Wasser Werte von mitunter 180dB gemessen. Dies stellt einerseits eine große und nicht zumutbare Belastung für Mitarbeiter und Taucher dar, andererseits sind die Schallwellen so stark, dass Fische durch diese getötet werden können. Auch die gesetzlichen Bestimmungen haben sich in diesem Gebiet geändert und tendieren dazu, nur geringere Schallemissionen zuzulassen.

Aufgabe der vorliegenden Erfindung ist es daher, eine Gründungsstruktur, ein Verfahren sowie eine Schallschutzvorrichtung anzugeben, durch die beim Rammen des Rammpfahles emittierter Schall wenigstens teilweise absorbierbar ist, insbesondere in stärkeren Maße absorbierbar als mittels bekannter Vorrichtungen und Verfahren.

Die Lösung der Aufgabe erfolgt erfindungsgemäß durch eine Gründungsstruktur mit den Merkmalen des Anspruches 1, durch ein Verfahren gemäß Anspruch 10 sowie durch eine Schallschutzvorrichtung gemäß Anspruch 15. Vorteilhafte Weiterbildungen und Ausgestaltungen der Erfindung sind in den Unteransprüchen angegeben.

Bei einer derartigen Gründungsstruktur für eine Offshore-Windenergieanlage mit zumindest mehreren Gründungspfählen, wobei jeder Gründungspfahl einen wenigstens abschnittsweise in seinem Inneren geführten Rammpfahl zur Verankerung im Meeresboden aufweist, und mit mindestens einer Stützkonstruktion zur Aufnahme des Turms einer Windenergieanlage, wobei die Stützkonstruktion die oberen Enden der Gründungspfähle untereinander verbindet, ist vorgesehen, dass der Gründungspfahl und der Rammpfahl, nach dem Aufstellen der Gründungsstruktur auf dem Meeresboden und Einrammen der Rammpfähle, auf einem vorbestimmten Längenabschnitt einen Bereich einer Überdeckung aufweisen, wobei im Überdeckungsbereich der Pfähle zumindest abschnittsweise der Spalt zwischen den Pfählen sowie über einen Abschnitt des Überdeckungsbereiches und in einem Teilstück unterhalb des Überdeckungsbereiches der freie, innere Querschnitt des Rammpfahles mit einem aushärtenden Füllmaterial verfüllt ist.

Mit Hilfe einer derartig festen Struktur um den Überdeckungsbereich der Gründungspfähle und der von den Gründungspfählen bereichsweise aufgenommenen Rammpfähle ist insbesondere ein Knicken oder Beulen der Pfahlwandungen im Bereich des Meeresbodens durch das innerhalb des Rammpfahles und des zwischen Gründungspfahl und Rammpfahles abschnittsweise ausgehärtete Füllmaterial auf vorteilhafte Weise vermieden. Das bis unterhalb des Überdeckungsbereiches im Inneren des Rammpfahles reichende Füllmaterial verleiht diesem über ein vorbestimmtes Teilstück eine optimale Steifigkeit, wodurch die Ausgestaltung des Rammpfahles aus einem einwandigen Rohr möglich ist. Durch das bevorzugt jeweils von unterhalb bis oberhalb des Überdeckbereiches reichende, aushärtende Füllmaterial, wie zum Beispiel Beton, ist mit Vorteil eine Gründungsstruktur erzeugt, mittels der sich problemlos eine betriebssichere Langzeitfunktion von den mindestens geforderten 20 Jahren gewährleisten lässt. Insbesondere bei Tripod-Strukturen mit drei in einem gleichseitigen Dreieck, parallel zueinander angeordneten Gründungspfählen, die vom Meeresboden bis über eine Wasseroberfläche reichen, wobei die oberen Enden der Gründungspfähle mit einer Stützkonstruktion verbunden sind, ist diese Gestaltung vorteilhaft und eine steife, haltbare Konstruktion wird erreicht.

Ferner kann bei derartigen Gründungsstrukturen vorgesehen sein, dass der Gründungspfahl im Fußbereich eine seinen freien Querschnitt an der inneren Mantelfläche verringernde Führung für den Rammpfahl aufweist. Die Verwendung einer Führung hat den Vorteil, dass der Rammpfahl während des Rammens insbesondere zu Beginn der Rammarbeiten axialbeweglich geführt ist, so dass der Rammpfahl mit seiner Mittenachse vorzugsweise koaxial zur Mittenachse des Gründungspfahles in den Meeresboden getrieben wird. Ein Verlaufen des Rammpfahles soll somit vorteilhaft vermieden werden. Die Führung ist dabei etwa über die Hälfte des Überdeckungsbereiches der beiden Pfähle im Spalt zwischen der Innenseite des Gründungspfahles und der Außenseite des Rammpfahles zumindest bereichsweise über den Umfang ausgebildet. Die Führung kann beispielsweise als Buchse ausgebildet sein. Bevorzugt werden mehrere Bleche eingesetzt, deren Längsachsen parallel zur Mittenachse des Gründungspfahles verlaufen und sich radial von der Innenseite des Gründungspfahles in Richtung der Mittenachse erstrecken.

Der Gründungspfahl weist optional einen Bodenring mit einer den Spalt zum Rammpfahl abdichtenden Dichtung auf, wodurch zum einen während und nach dem Rammen das Eindringen von Meerwasser, sowie Schlamm- oder Gesteinsteilen insbesondere in den Spalt im Bereich der Führung vermieden ist. Somit ist eine ungewollte Verschmutzung des nachfolgend auszubetonierenden Abschnitts von Gründungspfahl und Rammpfahl ausgeschlossen. Zum anderen verhindert die Dichtung im Bereich des Spaltes ebenfalls das Austreten des nachträglich eingebrachten Füllmaterials. Das aushärtende Füllmaterial verbleibt somit stets auf gleichem Niveau im Spalt zwischen Gründungspfahl und Rammpfahl und kann dementsprechend eine feste Verbindung mit den Oberflächen der jeweiligen Pfahlwandungen eingehen. Zur Ausbildung der am Bodenring vorgesehenen Dichtung kann beispielsweise ein Filz oder anderes geeignetes Material zum Einsatz kommen, das geeignet ist, um das Eindringen von Schlamm auszuschließen. Auf dem Bodenring kann des Weiteren von unten eine Berstscheibe aufgesetzt sein, welche den freien Querschnitt des vorzugsweise als Rohr ausgebildeten und damit unten offenen Rammpfahles wirkungsvoll verschließt und somit das Eindringen von Meerwasser bereits beim Absenken des zur Ausbildung der Gründungsstruktur dienenden Konstruktionsteiles auf den Meeresboden verhindert: Bereits beim Aufsetzen des Konstruktionsteiles auf den Meeresboden, jedoch spätestens mit dem Beginn der Rammarbeiten wird die Berstscheibe durch den vorzugsweise senkrecht nach unten getriebenen Rammpfahl zerstört, welche dabei kein Hindernis für die durchzuführenden Rammarbeiten darstellt. Vorzugsweise ist der Gründungspfahl beim Rammen jedoch mit Wasser, beispielsweise Meerwasser geflutet, sodass der Auftrieb der Gründungsstruktur verringert ist und das Einrammen ungehindert erfolgen kann.

Alternativ kann es vorteilhaft sein, keine Dichtung vorzusehen. So kann Wasser bei einem Absenken der Gründungsstruktur von einem Schiff aus auf den Meeresboden kontrolliert und gleichmäßig in die Gründungspfähle eindringen. Die Gefahr, dass durch ein plötzlich auftretendes Leck in einem abgedichteten Gründungspfahl eine plötzliche Schwerpunktverschiebung und somit ein Kippen der Gründungsstruktur auftritt, wird verringert. Die Dichtung sowie die Berstscheibe kann dann entfallen.

Der Gründungspfahl weist vorzugsweise ein seine innere Mantelfläche ausbildendes Innenrohr und ein seine äußere Mantelfläche ausbildendes Außenrohr auf, wobei zwischen Innenrohr und Außenrohr ein Kernwerkstoff angeordnet ist. Mit einem derartig Wandungsaufbau ist eine konstruktiv vorteilhafte Möglichkeit zur Ausbildung der Gründungspfähle erreicht. Durch den Sandwich-Aufbau der Pfahlwandung ist zum einen die Steifigkeit des Gründungspfahles verbessert und zum anderen kann die Menge des üblicherweise zur Ausbildung des Gründungspfahls verwendeten Stahls vorteilhaft verringert werden. Durch die erhöhte Steifigkeit lassen sich sowohl die Durchmesser als auch die Gesamtstärke des Innen- und Außenrohres deutlich minimieren, was gleichzeitig die Wirtschaftlichkeit solcher erfindungsgemäßer Gründungsstrukturen, aufgrund reduzierter Fertigungs- und Materialkosten, auf vorteilhafte Weise verbessert. Der Kernwerkstoff als Zwischenlage zwischen Innen- und Außenrohrwird insbesondere zusätzlich mit Bewehrung verstärkt, welche als Betonstabstahle oder in Form eines hohlzylindrischen Gitters im Kernwerkstoff angeordnet ist. Dabei ist vorgesehen, dass die Bewehrung stets vollständig vom Kernwerkstoff eingeschlossen und im Abstand zur Innenseite des Außenrohres und zur Außenseite des Innenrohres angeordnet ist.

Erfindungsgemäß ist bei einer Gründungsstruktur der eingangs genannten Art vorgesehen, dass wenigstens ein Abschnitt des Gründungspfahls eine Wandung aus mehreren Lagen aufweist, wobei mindestens eine innere Lage und eine äußere Lage vorgesehen sind, zwischen denen wenigstens eine Zwischenlage, welche einen schalldämmenden Kernwerkstoff, insbesondere Beton, aufweist, angeordnet ist.

Durch die erfindungsgemäße Gestaltung des Gründungspfahls, bzw. der Gründungspfähle der bevorzugten Tripod-Konstruktion der Gründungsstruktur, werden Schallemissionen reduziert. Die Gründungspfähle reichen nach dem Aufstellen der Gründungsstruktur auf dem Meeresboden vom Meeresboden bis über die Wasseroberfläche. Die Rammpfähle sind in den Gründungspfählen angeordnet und in diesen geführt. Indem der Gründungspfahl mehrere Lagen aufweist, wobei mindestens eine innere Lage und eine äußere Lage vorgesehen sind, zwischen denen wenigstens eine Zwischenlage, welche einen schalldämmenden Kernwerkstoff aufweist, wird die Schallübertragung beim Rammen von innerhalb des Gründungspfahls durch die Wandung des Gründungspfahls auf das den Gründungspfahl umgebenden Meerwasser gedämmt. Ein derartiger Kernwerkstoff kann beispielsweise Beton sein oder Beton, wie beispielsweise Stahlbeton, aufweisen. Die Zwischenlage weist vorzugsweise eine Stärke von wenigstens 6 cm auf, insbesondere wenigstens 8 cm. Dadurch wird emittierter Schall effektiv gedämmt.

Ferner wird mit Hilfe einer derartig erfindungsgemäßen Ausgestaltung einer zur Ausbildung von Teilbereichen der Gründungsstruktur eingesetzten Wandung auf vorteilhafte Weise die für die Fertigung der Gründungsstruktur benötigte Stahlmenge vorteilhaft reduziert. Sowohl die innere Lage als auch die äußere Lage der Wandung weisen dabei eine geringere Gesamtstärke als die sonst üblicherweise zur Ausbildung der bekannten Gründungsstrukturen benötigten Wandstärken auf. Speziell durch die Zwischenlage zwischen der inneren Lage und der äußeren Lage in Form eines Kernwerkstoffes lässt sich zudem die Festigkeit bzw. Steifigkeit der Wandung trotz der deutlich reduzierten Menge an Stahl mit Vorteil erhöhen. Dabei kann die Gesamtwandstärke der erfindungsgemäß ausgestalteten Wandung des Teilbereiches der Gründungsstruktur durch die Verwendung des Kernwerkstoffes zwischen der inneren und äußeren Lage, welche bevorzugt aus einem Stahl-Werkstoff ausgebildet ist, größer sein als die Wandstärke herkömmlicher Gründungsstrukturen. Trotz einer größeren Gesamtwandstärke kann die erfindungsgemäße Gründungsstruktur im Vergleich zu einer herkömmlich ausgebildeten Gründungsstruktur ein geringeres Eigengewicht aufweisen und lässt sich somit einfacher an seinen Aufstellort transportieren.

Mit Vorteil ist nach einer Weiterbildung der Erfindung vorgesehen, dass die innere Lage als Innenrohr und die äußere Lage als ein im Abstand zum Innenrohr verlaufendes Außenrohr ausgebildet ist. Die Verwendung eines Innenrohres und eines Außenrohres, zwischen denen bevorzugt vollständig bzw. voll umfänglich der Kernwerkstoff eingebracht ist, stellt eine konstruktiv vorteilhafte Möglichkeit zur Ausgestaltung bestimmter Bauteilbereichen der Gründungsstruktur dar. Die dabei bevorzugt zylindrische Ausgestaltung ermöglicht eine vorteilhaft gleichmäßige Lastaufnahme und Lastverteilung über die gesamte Struktur der insbesondere rohrförmigen Bauteile der Gründungsstruktur, was sich wiederum vorteilhaft auf die betriebssichere Langzeitfunktion der Gründungsstruktur auswirkt. Die gleichmäßige Verteilung der Zwischenlage ist zudem vorteilhaft für die gleichmäßige Schallemissionsreduktion der durch die Ramme verursachten Schallemission. Der Kernwerkstoff ist dabei vorzugsweise vollflächig mit der Außenseite des Innenrohres und mit der Innenseite des Außenrohres verbunden. Zwischen dem Kernwerkstoff und dem Innen- bzw. Außenrohr liegt beispielsweise eine Formschlussverbindung vor. Bei dem Kernwerkstoff kann es sich beispielsweise um einen nachträglich zwischen das Innen- und Außenrohr einbringbaren Werkstoff handeln, der allmählich aushärtet und den damit ausgerüsteten Bauteilen der Gründungsstruktur eine gute schallabsorbierende Eigenschaft und eine relativ hohe Steifigkeit verleiht. Gemäß einer bevorzugten Weiterbildung der Erfindung ist für die Gründungsstruktur eine Gaszuführeinrichtung zum Zuführen von unter Druck stehendem Gas, insbesondere Luft, in einen Spalt zwischen Gründungspfahl und Rammpfahl vorgesehen. Der Gründungspfahl reicht erfindungsgemäß im aufgestellten Zustand vom Meeresboden bis über die Wasseroberfläche. Der Rammpfahl ist in dem Gründungspfahl geführt. Zwischen Rammpfahl und Gründungspfahl ist ein Spalt ausgebildet. Dieser Spalt ist mit Wasser, beispielsweise Meerwasser, geflutet. Beim Rammen des Rammpfahls wird folglich der Schall, der durch das Rammen des Rammpfahls erzeugt wird, durch das Wasser, welches in dem Spalt zwischen Rammpfahl und Gründungspfahl angeordnet ist, auf den Gründungspfahl übertragen und durch diesen auf die Wasserumgebung. Vorzugsweise wird eine Gaszuführvorrichtung vorgesehen, mit der unter Druck stehendes Gas in den Spalt zwischen Gründungspfahl und Rammpfahl eingeleitet wird, sodass in dem Spalt ein Schleier aus Gasblasen gebildet wird. Vorzugsweise wird das unter Druck stehende Gas an einem unteren Ende des Gründungspfahls, nahe des Meeresbodens, in den Spalt eingeleitet. Die Blasen steigen dann in dem Spalt auf und bilden einen Schleier. Dadurch wird die Übertragung des Schalls vom Rammpfahl durch das Wasser in dem Spalt auf den Gründungspfahl wesentlich reduziert. Bei jedem Übergang von Wasser zu Gas und von Gas zu Wasser werden die Schallwellen gebrochen, wodurch dieser gedämmt wird. Daher ist es vorteilhaft einen Schleier aus eine Vielzahl von Blasen zu bilden. Um verschieden lange Wellen effektiv brechen zu können ist es zudem bevorzugt, dass die einzelnen Blasen verschiedene Durchmesser aufweisen. Vorzugsweise sind etwas 30 % bis 60 %, vorzugsweise etwa 50 % des Volumens durch Gasblasen gefüllt. So wird eine optimale Anzahl an Übergängen zwischen Gas und Wasser erzielt, wodurch der Schall effektiv gebrochen und absorbiert werden kann. Indem der Spalt zwischen Rammpfahl und Gründungspfahl ausgebildet ist und der Gründungspfahl bis über die Wasseroberfläche reicht, ist ein definierter Raum für den Spalt gebildet und der Schleier bzw. die Gasblasen werden nicht von einer Strömung von der Gründungsstruktur weggespült. Durch den Druckabfall in Richtung Wasseroberfläche vergrößern sich zudem die Blasen beim Aufsteigen, wodurch der Schallschutzeffekt weiter verstärkt wird. Bei bevorzugten Tripod-Gründungsstrukturen sind zudem die drei Gründungspfähle im Wesentlichen senkrecht zum Meeresboden bzw. vertikal ausgerichtet. Dadurch sind die Gasblasen gleichmäßig um einen Umfang um den Rammpfahl in dem Spalt verteilt einleitbar. Bei schräg angeordneten Gründungspfählen würden sich die Gasblasen auf einer Seite sammeln, wodurch der schallabsorbierende Effekt kaum zum Tragen käme. Ferner ist es bevorzugt, dass eine Schäumungsmittel-Zuführeinrichtung zum Zuführen von Schäumungsmittel, insbesondere Seifenstoffen, in einen Spalt zwischen Gründungspfahl und Rammpfahl vorgesehen ist. Vorzugsweise sind derartige Schäumungsmittel, insbesondere Seifenstoffe, ökologisch abbaubar und belasten somit die Umwelt nicht. Durch derartige Schäumungsmittel sind Gasblasen noch effektiver erzeugbar. Zudem bleiben die Gasblasen beim Aufsteigen voneinander separiert und ein gleichmäßiger Gasblasenschleier zur Schallabsorption kann sich in dem Spalt zwischen Rammpfahl und Gründungspfahl ausbilden.

Gemäß einer weiteren bevorzugten Ausführungsform weist die Gaszuführeinrichtung einen Zuführring und einen Zuführschlauch auf, wobei der Zuführring an einem Fußende des Gründungspfahls angeordnet und mit dem Zuführschlauch verbunden ist. Der Zuführring ist vorzugsweise vor dem Aufstellen der Gründungsstruktur auf dem Meeresboden mit dem Gründungspfahl verbunden. Vorzugsweise ist der Zuführring lösbar mit dem Gründungspfahl verbunden, sodass er nach dem Aufstellen und Rammen des Rammpfahls aus dem Gründungspfahl entfernbar ist. Alternativ kann der Zuführring auch erst nach dem Aufstellen eingebracht werden. Dazu können beispielsweise Gewichte an dem Zuführring angeordnet sein. Indem der Zuführring mit einem Zuführschlauch verbunden ist, ist es möglich, unter Druck stehendes Gas von oberhalb der Wasseroberfläche in den Spalt einzuleiten. So ist das Regulieren des Gasblasenschleiers von Oberhalb der Wasseroberfläche, beispielsweise von einem Montageschiff aus, möglich. Dadurch ist das Verfahren vereinfacht.

Vorzugsweise weist der Zuführring eine Vielzahl von Gasauslässen auf, zum Auslassen von Gasströmen in den Spalt zwischen Rammpfahl und Gründungspfahl, wobei die Gasauslässe vorzugsweise im Wesentlichen gleichmäßig auf einem Ringumfang verteilt sind. Dadurch wird der Gasblasenschleier gleichmäßig erzeugt, wodurch eine Schallabsorption in alle Richtungen gleichmäßig erfolgt. Die Gasauslässe sind dabei vorzugsweise Richtung Wasseroberfläche gerichtet. Dadurch wird das Einleiten weiter gleichmäßig ermöglicht. Vorzugsweise sind Gasauslässe mit verschiedenen Öffnungsdurchmessern vorgesehen. Dadurch können Gasblasen mit unterschiedlichen Größen erzeugt werden, wodurch die Absorption weiter verbessert wird. Ferner ist es bevorzugt, an den Gasauslässen Düsenelemente oder dergleichen anzuordnen. Dadurch ist es möglich die Größe der Blasen und die Streuung weiter zu beeinflussen.

Gemäß einer weiter bevorzugten Ausführungsform der Erfindung oder einem weiteren Aspekt der Erfindung wird die eingangs genannte Aufgabe gelöst durch einen Schallschutzmantel, welcher im Wesentlichen zylindrisch ausgebildet ist und den Gründungspfahl radial äußerlich umschließt. Besonders bevorzugt wird ein derartiger Schallschutzmantel in Kombination mit einer Gründungsstruktur nach einem der oben genannten bevorzugten Ausführungsformen eingesetzt. Der Schallschutzmantel ist vorzugsweise reversibel an der Gründungsstruktur anordenbar. Der Schallschutzmantel ist demnach beispielsweise vor Aufstellen der Gründungsstruktur um den Gründungspfahl bzw. jeden Pfahl der bevorzugten Tripod-Gründungsstruktur anordenbar und die Gründungsstruktur ist dann zusammen mit dem Schallschutzmantel bzw. den Schallschutzmänteln auf dem Meeresboden aufstellbar. Der Schallschutzmantel ist dazu ausgebildet Schall, welcher aufgrund eines Rammens des Rammpfahls im Inneren des Gründungspfahls von dem Gründungspfahl an die Wasserumgebung abgegeben wird, weiter zu absorbieren. Vorzugsweise ist der Gründungspfahl gemäß den oben beschriebenen Aspekten mehrlagig mit einem schallabsorbierenden Kernwerkstoff ausgebildet. So wird Schall, der beim Rammen des Rammpfahls erzeugt wird, effektiv absorbiert. Der Schallschutzmantel ist dann nach Abschluss des Rammens wieder entfernbar, und somit wiederverwendbar.

Vorzugsweise ist dabei zwischen Gründungspfahl und Schallschutzmantel ein im Wesentlichen zylindrischer Spalt ausgebildet und in diesem Spalt ist eine Gaszuführeinrichtung zum Zuführen von unter Druck stehendem Gas, insbesondere Luft, in diesen Spalt vorgesehen. Dadurch ist es möglich, in diesem Spalt zwischen Gründungspfahl und Schallschutzmantel einen Gasblasenschleier zu erzeugen, wodurch Schall weiter effektiv absorbiert werden kann. Die Gaszuführeinrichtung ist vorzugsweise nach den Merkmalen der oben beschriebenen Gaszuführeinrichtung ausgebildet. Vorzugsweise sind demnach beim Aufstellen der Gründungsstruktur zwei Gaszuführeinrichtungen vorgesehen, eine für den Spalt zwischen Rammpfahl und Gründungspfahl und eine für den Spalt zwischen Gründungspfahl und Schallschutzmantel. Für die bevorzugten Ausführungsformen und Gestaltungen des Gasblasenschleiers, sowie der Gaszuführvorrichtung und auch einem Zuführen von Schäumungsmitteln wird auf die obigen Beschreibungen Bezug genommen.

Vorzugsweise weist der Schallschutzmantel ein Chloropren Kautschuk-Material und/oder ein Polyamidfasergewebe auf. Chloropren Kautschuk-Material ist mit vielen kleinen Gasblasen versehen, wodurch dieses Material vorteilhaft als Schallschutzmantel einsetzbar ist. Polyamidfasergewebe dient dazu, das Chloropren Kautschuk-Material zu verstärken, sodass der Schallschutzmantel bei einem Anströmen der Gründungsstruktur bzw. des Gründungspfahls nicht gegen den Gründungspfahl gedrückt wird, wodurch es möglich ist, den Spalt zwischen Gründungspfahl und Schallschutzmantel aufrechtzuerhalten und somit auch den Gasblasenschleier im Wesentlichen homogen um den Umfang aufrechtzuerhalten. Dadurch ist die Schallabsorptionsfähigkeit wesentlich verbessert. Natürlich sind auch andere Materialien mit ähnlichen schallabsorbierenden Eigenschaften bevorzugt sowie andere Verstärkungsmaterialien. Beispielsweise ist ebenso ein Melamin-Schlauch nutzbar und als Verstärkung können auch Drahtseile eingesetzt werden.

Ein derartiger Schallschutzmantel kann einstückig sein, oder einzelne Segmente aufweisen. Vorzugsweise ist der Schallschutzmantel axial in mehrere Segmente aufteilbar. Die einzelnen Segmente weisen vorzugsweise eine leicht kegelstumpfförmige oder konische Form auf, sodass diese im Wesentlichen koaxial ineinander anordenbar sind. So ist der Schallschutzmantel platzsparend zusammenschiebbar. Die einzelnen Segmente weisen vorzugsweise Vorsprünge oder Anschläge auf, sodass diese bei einem Auseinanderziehen der ineinandergeschobenen einzelnen Segmente bzw. Aufrichten des Schallschutzmantels nicht voneinander getrennt werden und so im auseinandergezogenen Zustand einen im Wesentlichen zylindrischen Mantel bilden. Zum Fixieren der einzelnen Segmente zueinander in einem ausgezogenen bzw. errichteten Zustand können an diesen geeignete Fixiermittel, wie beispielsweise Rastvorsprünge, Clips, Klemmschrauben, Spannschrauben, Schnallen und dergleichen, angeordnet sein. Bevorzugt weisen die einzelnen Segmente zudem eine reversibel verschließbare Längsnaht auf. Diese Längsnaht ist beispielsweise mittels Klettverschlüssen, Haken, Schnallen, Riemen, Clips, Spannschrauben, Reißverschlüssen und dergleichen reversibel verschließbar. So können die einzelnen Segmente auch entlang der Längsachse geöffnet werden, wodurch diese platzsparender verstaubar sind und die Montage und Demontage vereinfacht ist.

Mit Vorteil ist nach einer Weiterbildung vorgesehen, dass der Rammpfahl ein im Abstand unterhalb des Überdeckungsbereiches angeordnetes Schott aufweist, welches den freien, inneren Querschnitt des Rammpfahles versperrt. Mit Hilfe eines derartigen Schotts ist beim Rammen des Rammpfahles das Eindringen von Wasser oder Schlamm über den hohlzylindrisch ausgebildeten Rammpfahl in das Innere des Gründungspfahles vermieden, so das der freie Querschnitt des Rammpfahles nur bis zum Schott mit Meeresboden gefüllt ist. Des Weiteren dient das Schott als Füllgrenze für das in den Rammpfahlkopf einzufüllende Füllmaterial, welches darin aushärtet und dem Rammpfahl eine verbesserte Steifigkeit verleiht. Das Schott ist insbesondere ein Plattenkörper, welcher mit seiner Plattenebene senkrecht zur Mittenachse des Rammpfahles verläuft und umlaufend mit der Innenseite der Rammpfahlwandung abdichtend verbunden, insbesondere verschweißt, ist. Das Schott ist dabei etwa in einem Abstand unter-halb des Gründungspfahlendes angeordnet, der der Länge der Überdeckung der Pfähle entspricht.

Um einen übermäßigen Druckaufbau im Inneren des Rammpfahles und somit eine unnötige Gegenkraft beim Rammen zu vermeiden, ist eine Entlüftung aus dem Rammpfahlinneren vorzusehen. Zu diesem Zweck weist der Rammpfahl in seiner Pfahlwandung unterhalb des Schotts mindestens einen Durchbruch auf. Beim Rammen kann dementsprechend im Rammpfahl befindliche Luft entweichen, so dass die Bestandteile des Meeresbodens im freien Querschnitt des Rammpfahles bis unterhalb des Schotts aufsteigen können. Dabei ist es von Vorteil, wenn unterhalb des Schotts mehrere Durchbrüche über die Länge des Rammpfahles und gleichzeitig mehrere Durchbrüche in der Pfahlwandung auf gleichem Höhenniveau auf dem Umfang des Rammpfahles verteilt angeordnet sind. Jeder Durchbruch zur Entlüftung in der Pfahlwandung des Rammpfahles kann zudem mit einem geeigneten Material abgedichtet sein, dass sich beispielsweise beim Kontakt mit Wasser auflöst und somit die Durchbrüche in der Pfahlwandung in Längsrichtung nacheinander zur Entlüftung freigegeben.

Der Rammpfahl weist in einer optionalen Gestaltung an seiner äußeren Mantelfläche einen sich radial nach außen erstreckenden Absatz als Anschlag an der Führung des Gründungspfahles auf, mit Hilfe dem der Rammpfahl in Längsrichtung formschlüssig mit insbesondere den die Führung ausbildenden Blechen an der Innenseite des Gründungspfahles in Anlage gebracht wird und eine Haltekraft auf den Gründungspfahl senkrecht nach unten ausübt. Der sich ringförmig entlang der Mantelfläche des Rammpfahles erstreckende Absatz ist insbesondere beabstandet zum oberen Ende des Rammpfahles angeordnet, so dass stets ein bestimmter Abschnitt des Rammpfahles oberhalb der Führung frei in den Gründungspfahl hineinsteht. Dadurch ist ein Spalt zwischen Außenseite des Rammpfahles und Innenseite des Gründungspfahles erzeugt, in den dann das Füllmaterial eingegeben werden kann. Die sich radial nach außen erstreckende Umfangsfläche des Absatzes kann gleichzeitig als Führungsfläche zum Abstützen an der Innenseite des Gründungspfahles ausgebildet sein. Damit ist die Führung des Rammpfahles innerhalb des Gründungspfahles weiter verbessert und gleichzeitig ein Verlaufen des Rammpfahles beim Rammen mit Vorteil vermieden. Der Absatz kann insbesondere ein flanschartiger Ringkörper sein, welcher mit der äußeren Mantelfläche des Rammpfahles verschweißt ist.

Eine andere Weiterbildung sieht vor, dass der Rammpfahl zumindest abschnittsweise auf der Innenseite der Pfahlwandung mit Bewehrung ausgerüstet ist. Mit Hilfe der Bewehrung wird insbesondere das nachträglich eingebrachte Füllmaterial verstärkt, wobei darüber hinaus dessen Zugfestigkeit erhöht wird und somit die Belastbarkeit der Pfähle im Bereich des Meeresbodens deutlich verbessert ist. Speziell dynamisch auf die Gründungsstruktur einwirkende Kräfte lassen sich problemlos von der verstärkten Bauteilstruktur der Gründung aufnehmen. Als Bewehrung kommt insbesondere Betonstahl in Form von Stäben zum Einsatz, welche auf einem vorbestimmten Teilkreisdurchmesser beabstandet zur Innenseite des Rammpfahles angeordnet sind. An Stelle von einzelnen Stäben kann ebenfalls auch ein zylindrischer Bewehrungskorb verwendet werden, der ähnlich einem Gitternetz auf einem gleichmäßigen Radius um die Mittenachse des Rammpfahles verläuft.

Die eingangs genannte Aufgabe wird ferner durch ein Verfahren in der eingangs genannten Art zum Dämmen von Schallemissionen beim Errichten einer Gründungsstruktur, insbesondere einer Gründungsstruktur nach einer der vorgenannten bevorzugten Ausführungsformen, für eine Offshore-Windenergieanlage gelöst, wobei die Gründungsstruktur wenigstens einen Gründungspfahl und einen in diesem geführten Rammpfahl aufweist, wobei das Verfahren den Schritt aufweist: Erzeugen eines Schleiers aus Gasblasen in einem wassergefluteten Spalt zwischen dem Gründungspfahl und dem Rammpfahl. Vorzugsweise wird gleichzeitig der Rammpfahl der Gründungsstruktur in den Meeresboden eingerammt. Dadurch wird Schall, der durch das Rammen des Rammpfahls erzeugt wird, von dem Gasschleier absorbiert.

Vorzugsweise weist das Verfahren ferner den Schritt auf: Anordnen eines Schallschutzmantels außerhalb des Gründungspfahls derart, dass dieser den Gründungspfahl radial im Wesentlichen umschließt, wobei zwischen diesen ein im Wesentlichen zylindrischer Spalt freibleibt. Ein derartiger Schallschutzmantel weist vorzugsweise die Merkmale eines oben beschriebenen Schallschutzmantels auf und ist dazu eingerichtet Schallemissionen weiter zu absorbieren. Bevorzugt ist ferner der Schritt: Erzeugen eines Schleiers aus Gas, insbesondere Luftblasen, in einem wassergefluteten Spalt zwischen dem Schallschutzmantel und dem Gründungspfahl vorgesehen, Durch diesen Gasblasenschleier in dem Zwischenraum zwischen Schallschutzmantel und Gründungspfahl wird die Schallemission weiter verringert. Der Gasblasenschleier zwischen Schallschutzmantel und dem Gründungspfahl ist vorzugsweise mit den Merkmalen eines oben beschriebenen Gasblasenschleiers ausgebildet. Insbesondere ist es bevorzugt, dass bei einem Rammen des Rammpfahls der Volumenanteil des Gases in dem Spalt zwischen Schallschutzmantel und Gründungspfahl und/oder in dem Spalt zwischen Gründungspfahl und Rammpfahl größer als 40 %, vorzugsweise größer als 45 %, insbesondere größer als 50 % ist. Aufgrund des Druckgefälles zwischen Wasseroberfläche und Meeresboden ist dieses Verhältnis selbstverständlich nicht starr, sondern variiert, insbesondere nimmt das Verhältnis vom Meeresboden aus in Richtung Oberfläche zu. Es hat sich gezeigt, dass Schall bei einem Verhältnis größer als 50 % besonders effektiv absorbiert wird. Es ist nicht erforderlich, einen möglichst großen Volumenanteil zu erreichen, jedoch ist ein Bereich größer als 50 % bevorzugt.

Desweiteren ist es bevorzugt, dass das Verfahren den Schritt aufweist: Einleiten eines Schäumungsmittels, insbesondere Seifenstoffen, in einen wassergefluteten Spalt der Gründungsstruktur. Ein derartiger Spalt ist beispielsweise der Spalt zwischen Rammpfahl und Gründungspfahl und/oder ein Spalt zwischen einem Schallschutzmantel und dem Gründungspfahl. Dadurch ist die Blasenbildung verbessert und der Schall kann effektiver absorbiert werden. Das Zuführen kann beispielsweise mittels einer Schäumungsmittelzuführeinrichtung mit den oben genannten Merkmalen ausgeführt werden.

In einem weiteren Aspekt wird die oben genannte Aufgabe gelöst durch eine Schallschutzvorrichtung zum Dämmen von Schallemissionen beim Errichten einer Gründungsstruktur, insbesondere einer Gründungsstruktur nach einem der vorstehenden bevorzugten Ausführungsformen, für eine Offshore-Windenergieanlage, mit einem Schallschutzmantel, welcher ausgebildet ist, einen Gründungspfahl vorzugsweise im Wesentlichen zylindrisch radial äußerlich zu umschließen und insbesondere ein Chloroprenkautschuk-Material und/oder ein Polyamidfasergewebe aufweist, und wenigstens einer Gaszuführeinrichtung zum Zuführen von unter Druck stehendem Gas, insbesondere Luft, in einen Spalt zwischen dem Gründungspfahl und einem Rammpfahl der Gründungsstruktur und/oder in einen Spalt zwischen dem Schallschutzmantel und dem Gründungspfahl. Eine derartige Schallschutzvorrichtung kann beim Errichten einer Gründungsstruktur eingesetzt werden. Nachdem ein Gründungspfahl auf dem Meeresboden aufgesetzt wurde, kann der Schallschutzmantel über den Gründungspfahl gestülpt werden, und die Gaszuführeinrichtung in einem Fußbereich angeordnet werden. Es ist jedoch ebenso bevorzugt, den Schallschutzmantel bereits im Werk oder auf einem Montage-Schiff vorzumontieren. Anschließend ist beim Rammen des Rammpfahls ein Gasblasenschleier erzeugbar, durch den der Schall, der beim Rammen des Rammpfahls erzeugt wird, absorbiert werden kann. Eine derartige Schallschutzeinrichtung ist demnach wiederverwendbar und kann bei einer Vielzahl von Gründungsstrukturen eingesetzt werden. In einer Alternative weist die Schallschutzvorrichtung mehrere Schallschutzmäntel auf, die im Wesentlichen konzentrisch zueinander angeordnet sind. Zwischen den mehreren Schallschutzmänteln sind mehrere Spalte ausgebildet, in denen mehrere Gasblasenschleier erzeugt werden können. Dadurch ist der Schall noch effektiver absorbiert.

Ein Ausführungsbeispiel der Erfindung, aus dem sich weitere erfinderische Merkmale ergeben, ist in der Zeichnung dargestellt. Es zeigen:
Fig. 1: eine Ansicht einer erfindungsgemäßen Gründungsstruktur,
Fig. 2: eine Ansicht eines Teilabschnittes eines zur Verankerung im Meeresboden verwendeten Gründungspfahles und des darin geführten Rammpfahles im Schnitt,
Fig. 3: eine Schnittdarstellung eines Gründungspfahls mit Rammpfahl, Schallschutzeinrichtung und Luftschleier,
Fig. 4: einen Längsschnitt eines Gründungspfahls mit einem Schallschutzmantel gemäß einer zweiten Ausführungsform, und
Fig. 5: eine Vollschnitt-Gesamtdarstellung eines Gründungspfahls mit Rammpfahl.

Mit 1 ist eine Gründungsstruktur für eine Offshore-Windenergieanlage bezeichnet, welche drei senkrecht verlaufende Gründungspfähle 2, 3, 4 und eine Stützkonstruktion 5 mit einer Vielzahl von Stäben 6, 7, 8 und mit einer Zentralaufnahme 9 für den Turm der nicht dargestellten Windenergieanlage aufweist. Die Gründungspfähle 2, 3, 4 stehen auf dem Meeresboden 10 auf, aus denen fest damit verbundene Rammpfähle 11, 12, 13 zur Verankerung im Meeresboden herausragen. Um eine sichere Verankerung zu gewährleisten, weisen die Rammpfähle 11 bis 13 einen in den Meeresboden gerammten Abschnitt auf, der etwa der Wassertiefe am Aufstellort entspricht. Die Stützkonstruktion 5 verbindet gleichzeitig die oberen bzw. freien Enden der Gründungspfähle 2, 3, 4 oberhalb der Wasserlinie 14 untereinander, so dass durch Wind- und Wellenlasten auf die Gründungsstruktur 1 oder die Windenergieanlage wirkende Kräfte vorteilhaft auf alle drei Gründungspfähle 2 bis 4 und deren Rammpfähle 11 bis 13 verteilt werden. Zusätzlich ist in einer vorbestimmten Wassertiefe oberhalb des Meeresbodens 10 eine zweite Stützkonstruktion 15 mit Stäben 16, 17, 18 vorgesehen, welche die drei Gründungspfähle 2 bis 4 während des Verbringens an den Aufstellort oder während des Rammens vorteilhaft zueinander fixiert. Die Stützkonstruktion 15 kann nach dem Aufstellen entfernt werden. Sie ist für die Gründungsstruktur nicht erforderlich, sondern nur vorteilhaft. Sowohl die Gründungspfähle 2 bis 4 und die Rammpfähle 11 bis 13 als auch die Pfosten bzw. Stäbe 6 bis 8 der Stützkonstruktion 5 weisen vorzugsweise eine zylindrische Ausgestaltung auf.

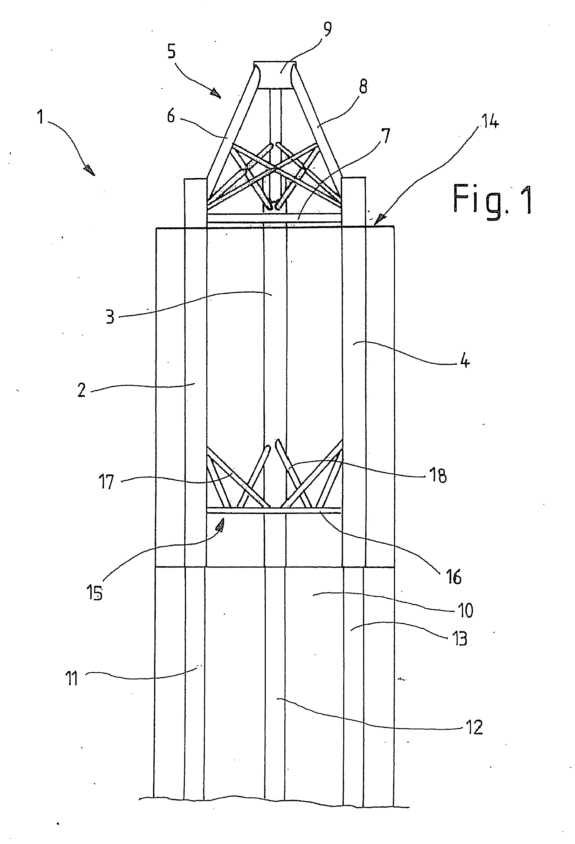

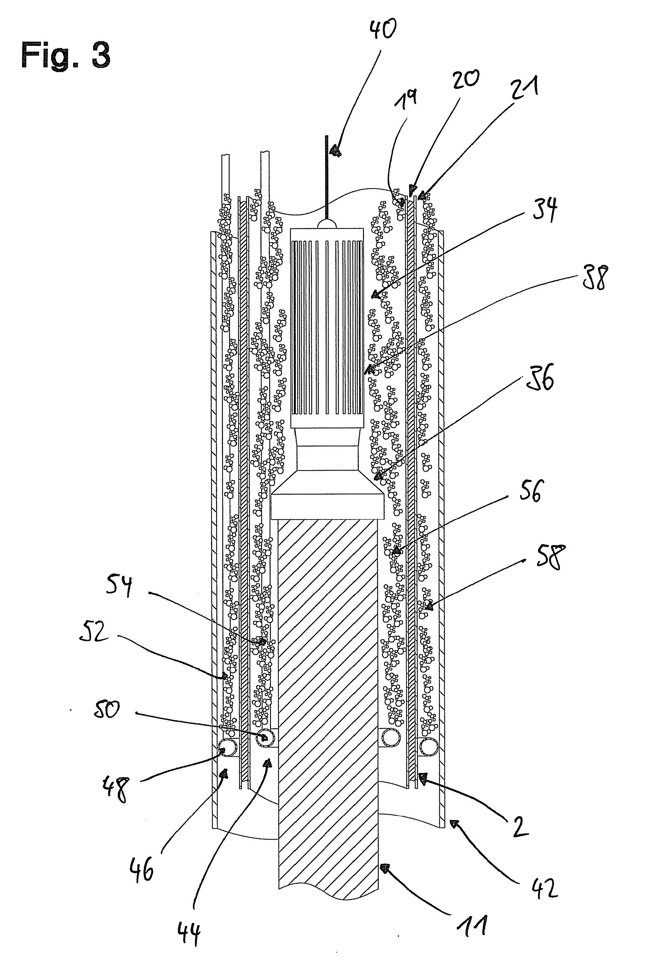

Beim Errichten der Gründungsstruktur 1 wird diese in der in Figur 1 gezeigten Weise zunächst auf dem Meeresboden 10 aufgestellt. Die Rammpfähle 11, 12, 13 sind schon vor dem Aufstellen in den Gründungspfählen 2, 3, 4 angeordnet. So ist es nicht erforderlich die Rammpfähle 11, 12, 13 nach Aufstellen der Gründungsstruktur 1 von oben in die Gründungspfähle 2, 3, 4 einzuführen. Ein genaues Ausrichten und Einführen der Rammpfähle 11, 12, 13 kann so entfallen. Nach dem Aufstellen werden die Rammpfähle 11, 12, 13 dann mittels einer Ramme 34 (Figur 3) in den Meeresboden 10 gerammt.

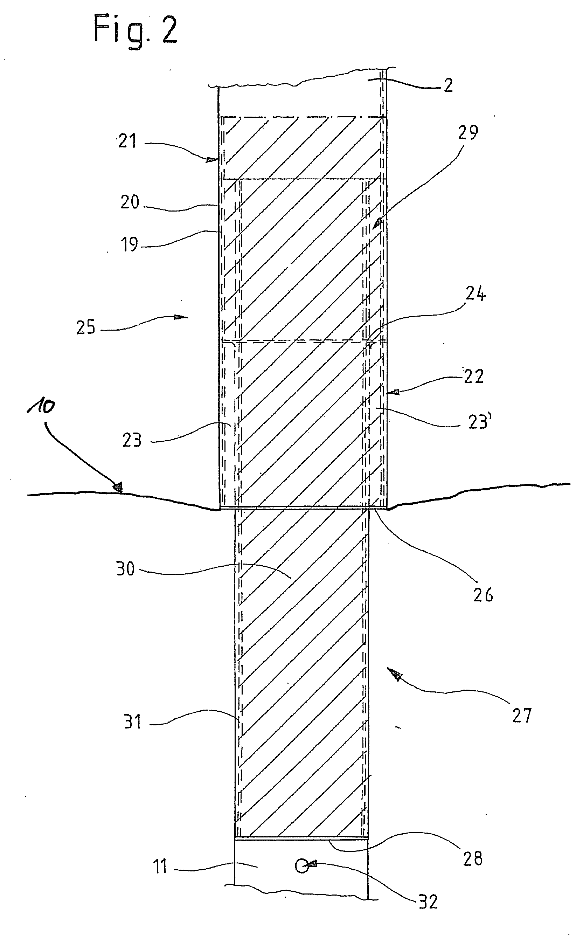

Fig. 2 zeigt eine Teilansicht eines der Gründungspfähle 2 bis 4 mit einem der darin aufgenommenen Rammpfähle 11 bis 13 im Schnitt und soll insbesondere deren Aufbau näher verdeutlichen. Jeder der Gründungspfähle 2 bis 4 weist eine Wandung aus mehreren Lagen 19, 20, 21 unterschiedlichen Materials auf. Zwischen der inneren, bevorzugt metallischen Lage 19 und der äußeren, metallischen Lage 20 ist eine Zwischenlage 21 aus einem Kernwerkstoff, wie zum Beispiel Beton, eingebracht. Jeder Gründungspfahl 2 bis 4 weist in seinem Fußbereich eine seinen freien Querschnitt an der inneren Mantelfläche verringernde Führung 22 für den Rammpfahl auf, wodurch das Verlaufen der Rammpfähle während des Rammens vermieden ist. Die Führung ist dabei mittels vier, an der inneren Lage 19 eines Gründungspfahles angeordneten Blechen 23, 23' ausgebildet, die in einem Winkel von 90 Grad zueinander an der Innenseite der inneren Lage in Längsrichtung verlaufen und sich radial nach innen erstrecken. Zur Ausbildung einer stabilen Endlage der Rammpfähle 11 bis 13 in einem jeweiligen Gründungspfahl 2 bis 4 ist an der Außenseite jedes Rammpfahls in einem vorbestimmten Abstand unterhalb des oberen Endes ein ringförmiger Anschlag 24 vorgesehen, der auf den oberen Enden der Bleche 23, 23' der Führung 22 zu Liegen kommt, so dass Abschnitte der beiden Pfähle zueinander einen Überdeckungsbereich 25 einer vorbestimmten Länge ausbilden. An der Unterseite jedes Gründungspfahles ist des Weiteren ein Bodenring 26 mit einer Dichtung zum Abdichten des Führungsspaltes zum Rammpfahl vorgesehen. Jeder Rammpfahl 11 bis 13 weist einen abgegrenzten Rammpfahlkopf 27 auf, der von einem Schott 28 begrenzt ist, welches von dessen oberen Ende in einem etwa die doppelte Länge des Überdeckungsbereiches 25 betragenden Abstand dessen freien, inneren Querschnitt versperrend angeordnet ist. Sowohl der Rammpfahlkopf 27 oberhalb des Schotts 28 als auch der Spalt 29 zwischen der Außenseite des Rammpfahles und der Innenseite des Gründungspfahles sowie das Teilstück des Gründungspfahles oberhalb des Überdeckungsbereiches 25 sind mit einem aushärtenden Füllmaterial 30 verfüllt. Zur Verbesserung der Zugfestigkeit des Füllmaterials 30 ist zumindest abschnittsweise auf der Innenseite der Rammpfahlwandung eine Bewehrung 31 aus beispielsweise Stäben angeordnet. Jeder Rammpfahl 11 bis 13 weist des Weiteren unterhalb des Schotts 28 mindestens einen Durchbruch 32 in seiner Pfahlwandung zur vorteilhaften Entlüftung während des Rammens in den Meeresboden 10 auf.

Die Zwischenlage 21 ist aus einem schalldämmenden Kernwerkstoff gebildet. Ein derartiger schalldämmender Kernwerkstoff kann beispielsweise Beton umfassen. Die Zwischenlage 21 weist vorzugsweise eine Stärke von 8 cm auf.

Figur 3 illustriert einen Abschnitt eines Gründungspfahls 2 mit einem Rammpfahl 11 während des Einrammens. Der Gründungspfahl 2 weist drei Lagen 19, 20, 21 auf. Die innere Lage 19 ist als Stahlrohr ausgebildet, welches konzentrisch in einem die äußere Lage 21 bildenden äußeren Stahlrohr angeordnet ist. Zwischen den beiden Lagen 19, 21 ist eine schalldämmende Zwischenlage 20 angeordnet. Gemäß diesem Ausführungsbeispiel ist die schalldämmende Zwischenlage 20 aus Beton ausgebildet und weist eine Stärke von etwa 8 cm auf. Der Rammpfahl 11 ist im Wesentlichen konzentrisch im Gründungspfahl 2 angeordnet. An dem oberen Ende des Rammpfahles 11 sitzt auf diesem eine Ramme 34 auf, die einen Rammkopf 36 und einen Rammkörper 38 aufweist. Die Ramme 34 ist über eine Versorgungsleitung 40 mit einem Schiff, welches an der Oberfläche schwimmt (nicht gezeigt) verbunden. Durch dieses Rammen des Rammpfahls 11 mittels der Ramme 34 werden enorme Schallemissionen freigesetzt. Insbesondere beim Rammen von zylindrischen Stahlrohren, wie beispielsweise des Rammpfahles 11 sind diese Emissionen sehr hoch, teilweise im Bereich von 180 dB und mehr.

In dem Spalt zwischen Rammpfahl 11 und Gründungspfahl 2 ist eine Gaszuführeinrichtung 44 angeordnet. Die Gaszuführeinrichtung 44 weist einen Zuführring 50 und eine Zuführleitung 54 auf, die bis zu einer Gasquelle an der Wasseroberfläche reicht (nicht gezeigt). Der Zuführring 50 weist eine Vielzahl von Öffnungen auf, zum Zuführen von unter Druck stehendem Gas in den Spalt zwischen Rammpfahl 11 und Gründungspfahl 2. Der gesamte Bereich zwischen Rammpfahl 11 und Gründungspfahl 2 ist mit Wasser geflutet, sodass durch das Zuführen von unter Druck stehendem Gas mittels der Gaszuführeinrichtung 44 ein Luftschleier 56 in dem Spalt zwischen Rammpfahl 11 und Gründungspfahl 2 gebildet wird.

Mit Abstand zum Rammpfahl 2 ist ein Schallschutzmantel 42 aus einem Material, welches Chloropren-Kautschuk und Polyamidfasern aufweist, angeordnet. In dem Spalt zwischen Schallschutzmantel 42 und Gründungspfahl 2 ist wiederum eine Gaszuführeinrichtung 46 angeordnet, die entsprechend der Gaszuführeinrichtung 44 ausgebildet ist. Sie weist ebenso einen Zuführring 48 und eine Zuführleitung 52 auf. Auch dieser Spalt ist mit Meerwasser geflutet, wodurch sich durch das Zuführen von unter Druck stehendem Gas mittels der Gaszuführeinrichtung 46 in dem Spalt ein Luftschleier 58 ausbildet. Durch die Luftschleier wird die Schallemission, welche durch die Ramme 44 erzeugt wird, effektiv gedämmt. Insgesamt sind also gemäß diesem Ausführungsbeispiel vier Schallschutzschichten vorgesehen: Zunächst der innere Gasblasenschleier 56, dann der Sandwich-Gründungspfahl 2 mit den schallbrechenden Übergängen Stahl-Beton-Stahl, anschließend ein zweiter Gasblasenschleier 58 und schließlich der Mantel 42, der ebenfalls schalldämmend wirkt.

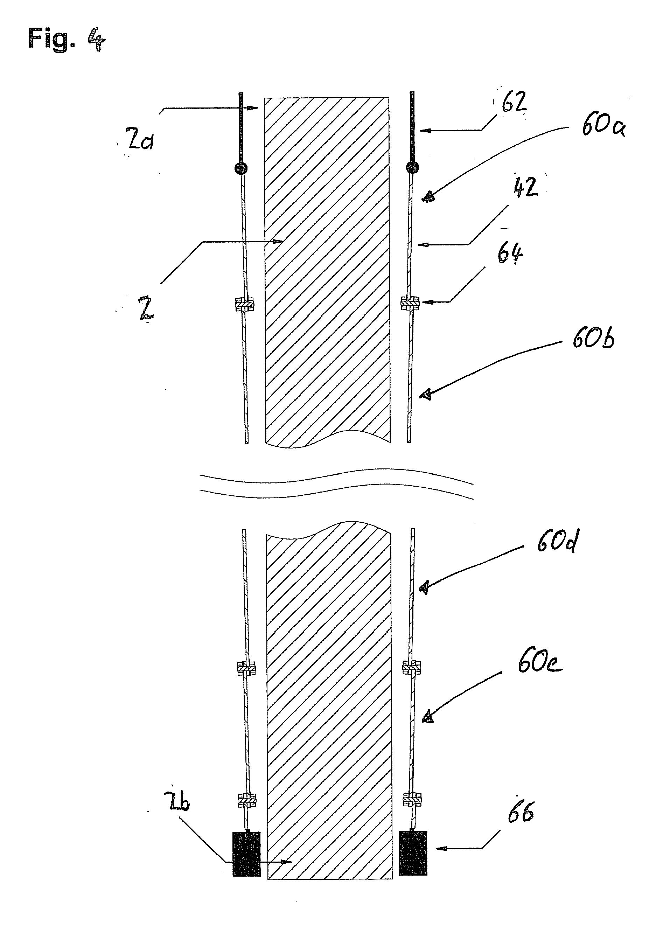

In einem zweiten Ausführungsbeispiel (siehe Figur 4) ist der Schallschutzmantel 42 aus mehreren axial ineinander schiebbaren Segmenten 60a, 60b, 60c, 60d gebildet. An einem unteren Ende des Schallschutzmantels 42, im Fußbereich 2b des Gründungspfahls 2 sind ans dem Schallschutzmantel Gewichte 66 vorgesehen, um den Schallschutzmantel 42 in Richtung des Meeresbodens (in Figur 4 nicht gezeigt) zu ziehen. So wird die Position des Schallschutzmantels 42 gut gehalten, sodass sich der Spalt zu dem Gründungspfahl 2 möglichst gleichmäßig ausgebildet ist. Am oberen Ende, im Kopfbereich 2a des Gründungspfahls 2 sind an dem Schallschutzmantel Halteseile 62 angeordnet, mit denen der Schallschutzmantel 42 in einer aufrechten Position gehalten werden kann. Die einzelnen Segmente 60a, 60b, 60c, 60d sind aus verstärktem Chloropren-Kautschuk Material gebildet, sodass eine Strömung diese nicht gegen den Rammpfahl 2 drücken kann. Nach Innen gerichtet können an den Segmenten 60a, 60b, 60c, 60d zudem Abstandshalter zum beabstandeten Halten des Schallschutzmantels 42 von dem Gründungspfahl 2, 3, 4 angeordnet sein, sodass der Schallschutzmantel 42 nicht durch eine Strömung an den Gründungspfahl 2, 3, 4 gedrückt wird.

Zwischen den einzelnen leicht konisch ausgebildeten Segmenten 60a, 60b, 60c, 60d sind als Fixiermittel Verschraubungen 64 angeordnet. Mittels den Verschraubungen 64 sind die einzelnen Segmente 60a, 60b, 60c, 60d gegeneinander fixierbar, sodass der Schallschutzmantel 42 im errichteten Zustand (Fig. 4) im Wesentlichen starr und zylindrisch ist.

Das Verfahren zum Dämmen von Schallemissionen beim Errichten einer Gründungsstruktur 1 kann dann wie folgt ausgeführt werden: Zunächst ist die Gründungsstruktur 1 auf einem Montageschiff gelagert (in den Figuren nicht gezeigt). Der Schallschutzmantel 42 ist schon an dem Gründungspfahl 2, 3, 4 bzw. an jedem Gründungspfahl 2, 3, 4 montiert. Auch die Gaszuführeinrichtungen 44, 46 sind schon vormontiert. Ist der Schallschutzmantel 42 entsprechend dem in Figur 4 gezeigten Ausführungsbeispiel gebildet, kann dieser noch in einem zusammengeschobenen Zustand sein.

Anschließend wird die gesamte Gründungsstruktur 1 mit in den Gründungspfählen 2, 3, 4 gelagerten Rammpfählen 11, 12, 13 den Schallschutzmänteln 42 und den Gaszuführeinrichtungen 44, 46 auf dem Meeresboden abgesetzt. Dabei werden die Spalte zwischen den Rammpfählen 11, 12, 13 und den Gründungspfählen 2, 3, 4 mit Meerwasser geflutet. Ist der Schallschutzmantel 42 noch nicht fertig montiert kann dies nun geschehen. Die Gewichte 66 können auch abgesenkt werden. Vorzugsweise wird der Schallschutzmantel 42 mittels der Gewichte 66 auseinandergezogen und nur leicht mittels der Seile 62 gehalten. Durch den Auftrieb richtet sich der Schallschutzmantel 42 selbststätig auf.

Nun wird mit dem Erzeugen der Gasblasenschleier 56, 58 begonnen. Dazu wird unter Druck stehenden Gas, insbesondere Druckluft, mittels den Gaszuführeinrichtungen 44, 46 in die Spalte zwischen Schallschutzmantel 42 und Gründungspfahl 2, 3, 4 sowie zwischen Gründungspfahl 2, 3, 4 und Rammpfahl 11, 12, 13 geleitet. Anschließend oder gleichzeigt wird mit dem Rammen des Rammpfahles 11, 12, 13 begonnen.

Nach Abschluss des Rammens kann der Schallschutzmantel 42 mit der Gaszuführeinrichtung 46 wieder entfernt werden. Wird der Spalt zwischen Gründungspfahl 2, 3, 4 und Rammpfahl 11, 12, 13 mit Beton verfüllt, verbleibt die Gaszuführeinrichtung 44 in dem Spalt.

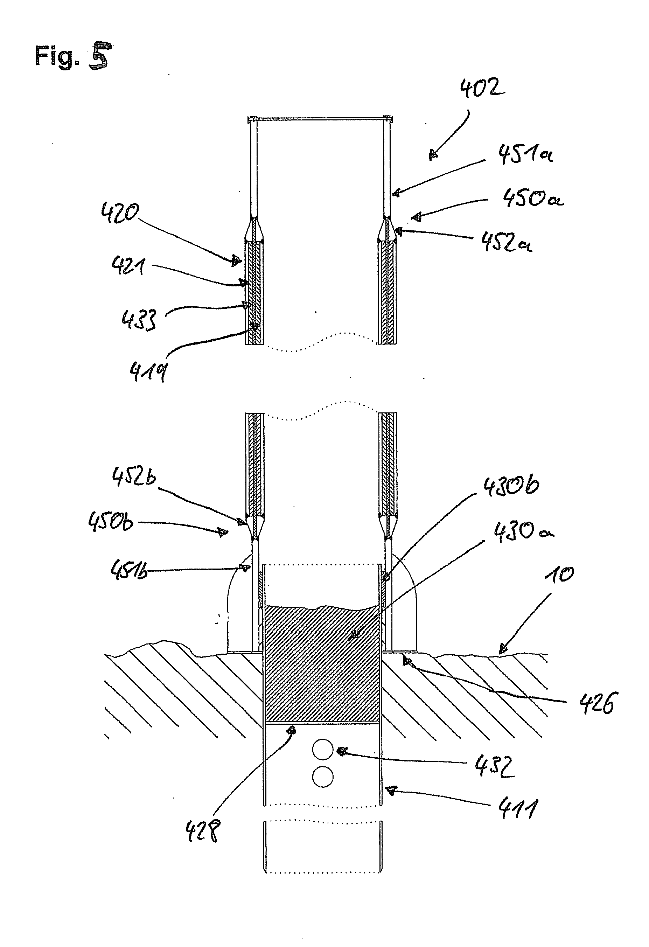

Figur 5 zeigt einen Gründungspfahl 402 in einem Vollschnitt. Gleiche und ähnliche Bezugszeichen sind mit um 400 heraufgesetzten Bezugszeichen versehen, insofern wird vollumfänglich auf die obige Beschreibung Bezug genommen. Der Gründungspfahl 402 ist als Sandwich-Pfahl ausgebildet und weist ein die innere Lage 419 bildendes inneres Rohr, ein die äußere Lage 420 bildendes äußeres Rohr auf. An jeweils axialen Enden des inneren und äußeren Rohres 419, 420 ist jeweils ein Sandwich-Anschluss 450a, 450b angeordnet. Der Sandwich-Anschluss 450a, 450b weist einen im Querschnitt konisch geformten Ringflansch 452a, 452b auf, der das innere und äußere Rohr 419, 420 miteinander verbindet. Auf der anderen Seite ist der Ringflansch 452a, 452b mit einem Rohranschluss 451 a, 451 b verbunden, der als massives Rohr ausgebildet ist. In dem Zwischenraum zwischen den Rohren 419, 420 sind Bewehrungsstäbe 433 angeordnet, die sich entlang der Längsachse erstrecken und durch Ausnehmungen in den Ringflanschen 452a, 452b sich hindurch erstrecken. Diese Bewehrungsstäbe 433 sind ebenfalls mit den Anschlussrohren 451 a, 451 b verbunden.

Der Gründungspfahl 402 ist auf dem Meeresboden 10 aufgestellt. Im Inneren des Gründungspfahls 402 ist ein Rammpfahl 411 angeordnet, der in der Nähe seines Kopfendes ein Schott 428 aufweist und zwei unter dem Schott 428 angeordnete Entlüftungsöffnungen 432. Der obere Bereich des Rammpfahls 411 ist mit Beton 430a verfüllt. Vorzugsweise ist Beton 430a zu einer Höhe eingefüllt, die etwa zwei Mal dem Durchmesser des Rammpfahls 411 entspricht. Auch in dem Zwischenraum zwischen dem Rammpfahl 411 und dem Gründungspfahl 402 ist Beton 430b eingefüllt, um eine feste Verbindung zwischen den beiden Pfählen 402, 411 zu bilden.

## Patentansprüche

1. Gründungsstruktur (1) für eine Offshore-Windenergieanlage mit wenigstens einem Gründungspfahl (2, 3, 4), vorzugsweise drei Gründungspfählen, wobei der Gründungspfahl (2, 3, 4) eine Länge derart aufweist, dass er an einem Aufstellort aufgestellt von einem Meeresboden (10) aus bis über einen Meeresspiegel (14) reicht, wobei der Gründungspfahl (2, 3, 4) einen wenigstens abschnittsweise in seinem Inneren geführten Rammpfahl (11, 12, 13) zur Verankerung im Meeresboden (10) aufweist, und mit mindestens einer Stützkonstruktion (5) zur Aufnahme der Windenergieanlage,
**dadurch gekennzeichnet, dass** wenigstens ein Abschnitt des Gründungspfahls (2, 3, 4) eine Wandung aus mehreren Lagen (19, 20, 21) aufweist, wobei mindestens eine innere Lage (19) und eine äußere Lage (20) vorgesehen sind, zwischen denen wenigstens eine Zwischenlage (21), welche einen schalldämmenden Kernwerkstoff, insbesondere Beton, aufweist, angeordnet ist.

2. Gründungsstruktur nach Anspruch 1,
**dadurch gekennzeichnet, dass** die innere Lage (19) als Innenrohr und die äußere Lage (20) als ein im Abstand zum Innenrohr verlaufendes Außenrohr ausgebildet ist.

3. Gründungsstruktur nach einem der vorstehenden Ansprüche,
**gekennzeichnet durch** eine Gaszuführeinrichtung (44, 46) zum Zuführung von unter Druck stehendem Gas, insbesondere Luft, in einen Spalt zwischen Gründungspfahl (2, 3, 4) und Rammpfahl (11, 12, 13).

4. Gründungsstruktur nach einem der vorstehenden Ansprüche,
**gekennzeichnet durch** eine Schäumungsmittel-Zuführeinrichtung zum Zuführung von Schäumungsmittel, insbesondere Seifenstoffen, in einen Spalt zwischen Gründungspfahl (2, 3, 4) und Rammpfahl (11, 12, 13).

5. Gründungsstruktur nach Anspruch 3 oder 4,
**dadurch gekennzeichnet, dass** die Gaszuführeinrichtung (44, 46) einen Zuführring (48, 50) und einen Zuführschlauch (52, 64) aufweist, wobei der Zuführring (48, 50) an einem Fußende des Gründungspfahls (2, 3, 4) angeordnet und mit dem Zuführschlauch (52, 54) verbunden ist.

6. Gründungsstruktur nach Anspruch 5,
**dadurch gekennzeichnet, dass** der Zuführring (48, 50) eine Vielzahl von Gasauslässen aufweist, zum Auslassen von Gasströmen in den Spalt zwischen Rammpfahl (11, 12, 13) und Gründungspfahl (2, 3, 4), wobei die Gasauslässe vorzugsweise im Wesentlichen gleichmäßig auf einem Ringumfang verteilt sind.

7. Gründungsstruktur nach einem der vorstehenden Ansprüche,
**gekennzeichnet durch** einen Schallschutzmantel (42), welcher im Wesentlichen zylindrisch ausgebildet ist und den Gründungspfahl (2, 3, 4) radial äußerlich umschließt.

8. Gründungsstruktur nach Anspruch 7,
**dadurch gekennzeichnet, dass** zwischen Gründungspfahl (2, 3, 4) und Schallschutzmantel (42) ein im Wesentlichen zylindrischer Spalt ausgebildet ist und eine Gaszuführeinrichtung (46) zum Zuführung von unter Druck stehendem Gas, insbesondere Luft, in diesen Spalt vorgesehen ist.

9. Gründungsstruktur nach Anspruch 7 oder 8,
**dadurch gekennzeichnet, dass** der Schallschutzmantel (42) ein Chloropren-Kautschuk-Material und/oder ein Polyamid-Faser-Gewebe aufweist.

10. Verfahren zum Dämmen von Schallemissionen beim Errichten einer Gründungsstruktur (1), insbesondere einer Gründungsstruktur (1) nach einem der vorstehenden Ansprüche, für eine Offshore-Windenergieanlage, wobei die Gründungsstruktur wenigstens einen Gründungspfahl (2, 3, 4) und einen in diesem geführten Rammpfahl (11, 12, 13) aufweist, mit dem Schritt:
Erzeugen eines Schleiers (56, 58) aus Gasblasen in einem wassergefluteten Spalt zwischen dem Gründungspfahl (2, 3, 4) und dem Rammpfahl (11, 12, 13).

11. Verfahren nach Anspruch 10,
ferner umfassend den Schritt:
Anordnen eines Schallschutzmantels (42) außerhalb des Gründungspfahls (2, 3, 4) derart, dass dieser den Gründungspfahl (2, 3, 4) radial im Wesentlichen umschließt, wobei zwischen diesen ein im Wesentlichen zylindrischer Spalt frei bleibt.

12. Verfahren nach Anspruch 11,
ferner umfassend den Schritt:
Erzeugen eines Schleiers (56, 58) aus Gas-, insbesondere Luftblasen, in einem wassergefluteten Spalt zwischen dem Schallschutzmantel (42) und dem Gründungspfahl (2, 3, 4).

13. Verfahren nach einem der Ansprüche 10 bis 12,
**dadurch gekennzeichnet, dass** bei einem Rammen des Rammpfahles (11, 12, 13) der Volumenanteil des Gases in dem Spalt zwischen Schallschutzmantel (42) und Gründungspfahl (2, 3, 4) und/oder in dem Spalt zwischen Gründungspfahl (2, 3, 4) und Rammpfahl (11, 12, 13) größer als 40%, vorzugsweise größer als 45%, insbesondere größer als 50% ist.

14. Verfahren nach einem der Ansprüche 10 bis 13,
ferner umfassend den Schritt:
Einleiten eines Schäumungsmittels, insbesondere Seifenstoffen, in einen wassergefluteten Spalt der Gründungsstruktur (1).

15. Schallschutzvorrichtung zum Dämmen von Schallemissionen beim Errichten einer Gründungsstruktur, insbesondere eine Gründungsstruktur (1) nach einem der Ansprüche 1 bis 9, für eine Offshore-Windenergieanlage, mit
einem Schallschutzmantel (42), welcher ausgebildet ist einen Gründungspfahl (2, 3, 4) vorzugsweise im Wesentlichen zylindrisch radial äußerlich zu umschließen und insbesondere ein Chloropren-Kautschuk-Material und/oder ein Polyamid-Faser-Gewebe aufweist, und
wenigstens einer Gaszuführeinrichtung (44, 46) zum Zuführung von unter Druck stehendem Gas, insbesondere Luft, in einen Spalt zwischen dem Gründungspfahl (2, 3, 4) und einem Rammpfahl (11, 12, 13) der Gründungsstruktur (1) und/oder in einen Spalt zwischen dem Schallschutzmantel (42) und dem Gründungspfahl (11, 12, 13).
